# EUROPEAN PATENT SPECIFICATION

(11) **EP 4 103 767 B1**
(45) Date of publication and mention of the grant of the patent: **26.03.2025**
(21) Application number: 21752885.0
(22) Date of filing: 05.02.2021
(51) Int. Cl.: C25F 3/14, B65G 15/48, F16G 1/20, B21D 53/14

(54) **A METHOD FOR SURFACE TREATMENT OF A STEEL BELT**
VERFAHREN ZUR OBERFLÄCHENBEHANDLUNG EINES STAHLBANDES
PROCÉDÉ DE TRAITEMENT DE SURFACE D'UNE BANDE D'ACIER

(30) Priority: 10.02.2020 SE 2050141
(43) Date of publication of application: 21.12.2022
(73) Proprietor: IPCO Sweden AB, 811 81 Sandviken (SE)
(72) Inventor: GRANAT, Patrik, 811 36 Sandviken (SE); THAMIR, Dina, 70771 Leinfelden-Echterdingen (DE)
(74) Representative: Eriksson, Tommy
(86) International application number: PCT/SE2021/050082
(87) International publication number: WO 2021/162607

(56) References cited:
- EP-A1- 1 744 092
- EP-A1- 2 891 819
- WO-A1-2015/026348
- CN-A- 103 290 394
- JP-A- S6 431 956
- US-A- 6 063 215
- US-A1- 2009 139 397
- US-A1- 2013 168 256
- US-A1- 2015 118 411
- US-A1- 2017 022 626

## Description

### TECHNICAL FIELD

The invention relates to a method for surface treatment of a steel belt, and a steel belt.

### BACKGROUND

Steel belts, for example CN103290394B, are used within a wide range of industries for processing and manufacturing of a variety of products. Such endless steel belts are used for conveying, pressing, cooling, etc. For example, there are steel belts used for production of wood-based panels, such as particle board, MDF, OSB and coated boards. Further applications where steel belts are used are cooling and solidifying of chemical and food products.

Depending on the environment and the particular application, a steel belt has to meet a variety of requirements. In some applications, where otherwise it would be difficult to remove the current product from the steel belt, so called release agents are often used for improving the releasability of products transported and/or produced on the steel belt.

### SUMMARY

An objective of the invention is to provide a method for surface treatment of a steel belt, by which method a steel belt with improved ability to release products can be provided.

The objective is achieved by a method for surface treatment of a steel belt, where the method comprises the steps of providing the steel belt made of martensitic stainless steel, performing an electrochemical polishing of a surface of the steel belt and performing a subsequent heat treatment of the steel belt, thereby forming a metal oxide layer on the electrochemical polished surface of the steel belt.

The invention is based on the insight that by such a method, a steel belt with a stable surface for improved releasability can be achieved. Hereby, use of release agents can be reduced or eliminated in certain applications.

The combination of electrochemical polishing and heat treatment of the steel belt has been proven to be advantageous for creating a surface associated with improved releasability. The metal oxide layer formed on the steel belt can be a mixture of oxides, preferably containing mainly chromium oxide and iron oxide. Such a metal oxide layer may have a thickness in the interval 10-150 nm, preferably 30-120 nm, and often 50-100 nm.

According to one embodiment, the method comprises the step of providing the steel belt made of a low carbon, chromium-nickel steel. For this type of steel, improved releasability can be obtained at the same time as the steel belt fulfils other requirements such as strength and manufacturability.

For example, the steel belt can be made of a stainless steel of type 15-7 PH, although other steel grades could be used, such as for example 17-4 PH, 15-5 PH, 17-7 PH, PH 15-7 Mo, PH 13-8 Mo. One particular steel that may be used has the chemical composition of 0.04% C, 1.5% Si, 0.5% Mn, 14.0% Cr, 7.0% Ni, 0.7% Cu, 0.3% Ti, 0.8% Mo, by weight, and balance iron.

According to a further embodiment, the method comprises the step of providing the steel belt made of a steel which is hardenable by precipitation hardening. Hereby, the strength of the steel belt can be increased by participation hardening at the same time as the metal oxide layer is created. By the use of a martensitic stainless steel, preferably a low carbon chromium-nickel steel, the heat treatment parameters can be selected to fit both the hardening process and the formation of the metal oxide layer.

According to a further embodiment, the method comprises the step of performing the heat treatment of the steel belt in an atmosphere that is air. Hereby, the heat treatment can be relatively uncomplicated, though other atmospheres containing oxygen could also be used.

According to a further embodiment, the method comprises the step of performing the heat treatment of the steel belt at a temperature in the interval 450-650°C, preferably 480-600°C, and often in the interval 500-550°C. The heat treatment of the steel belt is preferably performed for a time period in the interval 0.75-1.25 hours. Hereby, the desired strength of the steel belt can be reached at the same time as the metal oxide layer is formed.

According to another aspect of the invention, a further objective is to provide a steel belt, by which steel belt an improved ability to release products can be provided.

This objective is achieved by a steel belt made of martensitic stainless steel, where the steel belt has a metal oxide layer which layer has been formed on an electrochemical polished surface of the steel belt by means of a heat treatment of the steel belt.

The metal oxide layer formed on the steel belt is a mixture of oxides, containing mainly chromium oxide and iron oxide.

According to one embodiment, the metal oxide layer has a thickness in the interval 10-150 nm, preferably 30-120 nm, and often 50-100 nm. The metal oxide layer thickness exceeds the usual thickness of a passive chromium oxide layer spontaneously formed at the surface of a stainless steel.

According to a further embodiment, the steel belt is made of a low carbon, chromium-nickel steel. For this type of steel, improved releasability can be obtained at the same time as the steel belt fulfils other requirements such as strength and manufacturability.

For example, the steel belt can be made of a stainless steel of type 15-7 PH, although other steel grades could be used, such as for example 17-4 PH, 15-5 PH, 17-7 PH, PH 15-7 Mo, PH 13-8 Mo. One particular steel that may be used has the chemical composition of 0.04% C, 1.5% Si, 0.5% Mn, 14.0% Cr, 7.0% Ni, 0.7% Cu, 0.3% Ti, 0.8% Mo, by weight, and balance iron.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
- Fig. 1: is a flow chart illustrating a method for surface treatment of a steel belt,
- Fig. 2: is a schematic perspective view showing an endless steel belt, and
- Fig. 3: is a cross sectional view of a part of the steel belt in Fig. 2.

### DETAILED DESCRIPTION OF EXAMPLE EMBODIMENTS

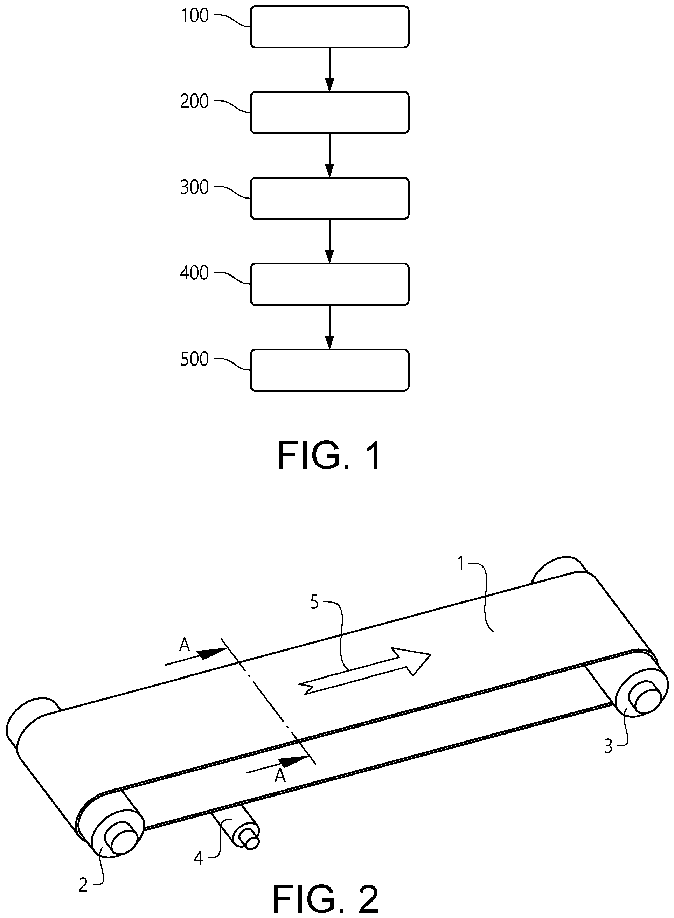

Fig. 1 shows a flow chart illustrating an example embodiment of a method for surface treatment of a steel belt.

Starting from a steel belt, which can be rolled and machined to the desired dimensions, the method comprises the step of providing 100 the steel belt made of martensitic stainless steel. The steel belt is suitably cleaned 200 from dirt and grease before performing an electrochemical polishing 300 of a surface of the steel belt.

The electrochemical polishing 300 can be performed according to methods known by the skilled person in the art. The process is briefly the following; the steel belt is immersed in an electrolyte and connected to the positive (anodic) terminal of a power source, and the negative (cathodic) terminal of the power source is connected to a conductor which also is immersed in the electrolyte. The electrolyte is a solution of acids. When applying a current to the electric circuit by means of the power source, material is removed from the steel belt surface, since metal ions from the steel belt surface are emitted and transferred to the solution. The outermost surface layer is eroded.

Due to an increased current density, irregularities of the surface are eroded to a greater extent than other parts. This leads to a smoother surface with reduced micro-roughness and a brightened surface. The electric current applied, the electrolyte and the exposure time are all parameters which have impact on the amount of material removed from the steel belt. These and other parameters are selected to achieve a surface prepared for performing a subsequent heat treatment.

Even if only a part of the steel belt surface need to have an improved ability to release a product from the steel belt, practically, the entire steel belt is preferably electropolished.

Depending on the management of the steel belt after performed electropolishing, the steel belt can suitably be cleaned 400 from dirt and grease for preparing the steel belt for the subsequent heat treatment 500.

The heat treatment 500 is suitably performed in a furnace having an atmosphere that is air. The temperature in the furnace and the time the heat treatment lasts can be selected to achieve the desired characteristics of the metal oxide layer formed by the heat treatment. In a case where a martensitic low carbon, chromium-nickel steel, which is hardenable by precipitation hardening, is used, the formation of the metal oxide layer can be performed at the same time as the steel belt is precipitation hardened. For example, the temperature in the furnace can be in the interval 450-650 °C, preferably 480-600 °C. For this type of steel, the heat treatment of the steel belt is suitably performed for a time period in the interval 0.75-1.25 hours at a temperature in the interval 500-550 °C. Such a heat treatment will strengthened the steel belt at the same time as the desired metal oxide layer is created.

After the heat treatment 500, the steel belt can be further managed for installation. For example, the ends of the steel belt can be prepared for welding the ends to each other so as to form an endless steel belt.

Fig. 2 is a schematic perspective view showing an endless steel belt 1 arranged for running over two rolls. The steel belt 1 is suitably a relatively thin metal sheet. For example, the thickness of the steel belt 1 can be a few millimetres and the width can be hundreds of millimetres. The length of the steel belt can be several meters. The dimensions are of course adapted to the current application where the steel belt is to be used. As an example only, the width can be 850 mm and the thickness can be 1.2 mm.

The endless steel belt 1 is arranged as a loop around a first driving roll 2, which is powered for moving the steel belt 1, and an idling end roll 3. Further, a control roll 4 is arranged for guiding the steel belt 1. The direction of motion of the steel belt 1 is indicated by an arrow 5. Thus, the steel belt 1 is moving in the longitudinal direction of the steel belt.

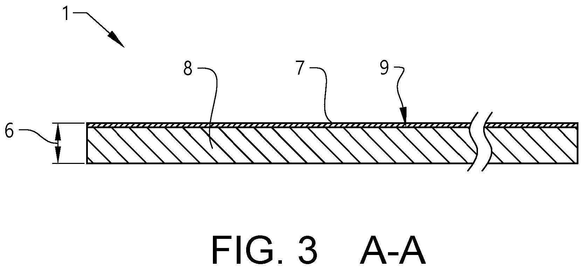

Fig. 3 is an enlarged cross sectional view of a part of the steel belt 1 in Fig. 2. As mentioned hereinabove, the steel belt 1 can have a thickness 6 of a few millimetres. The steel belt 1 has a metal oxide layer 7 on the surface. For illustration purposes only, in Fig. 3, the metal oxide layer 7 has been enlarged relative to the core 8 of the steel belt 1. The metal oxide layer 7 has been formed on a surface 9 of the steel belt 1 by means of a heat treatment of the steel belt 1. Before the heat treatment, the surface 9 has previously been electrochemical polished. Such a metal oxide layer 7 can have a thickness in the interval 10-150 nm, preferably in the interval 30-120 nm, more preferably 50-100 nm.

It is to be understood that the present invention is not limited to the embodiments described above and illustrated in the drawings; rather, the skilled person will recognize that many changes and modifications may be made within the scope of the appended claims.

## Claims

1. A method for surface treatment of a steel belt, the method comprising the steps of providing (100) the steel belt (1) made of martensitic stainless steel, performing an electrochemical polishing (300) of a surface (9) of the steel belt and performing a subsequent heat treatment (500) of the steel belt, thereby forming a metal oxide layer (7) comprising chromium oxide and iron oxide on the electrochemical polished surface (9) of the steel belt (1).

2. A method according to claim 1, **characterized by** providing the steel belt (1) made of a low carbon, chromium-nickel steel.

3. A method according to claim 1 or 2, **characterized by** providing the steel belt (1) made of a steel which is hardenable by precipitation hardening.

4. A method according to any preceding claim, **characterized by** performing the heat treatment (500) of the steel belt (1) in an atmosphere that is air.

5. A method according to any preceding claim, **characterized by** performing the heat treatment (500) of the steel belt (1) at a temperature in the interval 450-650°C.

6. A method according to any preceding claim, **characterized by** performing the heat treatment (500) of the steel belt (1) at a temperature in the interval 480-600°C.

7. A method according to any preceding claim, **characterized by** performing the heat treatment (500) of the steel belt (1) at a temperature in the interval 500-550°C.

8. A method according to any preceding claim, **characterized by** performing the heat treatment (500) of the steel belt (1) for a time period in the interval 0.75-1.25 hours.

9. A steel belt made of martensitic stainless steel, the steel belt (1) having a metal oxide layer (7) comprising chromium oxide and iron oxide which layer has been formed on an electrochemical polished surface (9) of the steel belt (1) by means of a heat treatment of the steel belt.

10. A steel belt according to claim 9, **characterized in that** the metal oxide layer (7) has a thickness in the interval 10-150 nm.

11. A steel belt according to claim 9, **characterized in that** the metal oxide layer (7) has a thickness in the interval 30-120 nm.

12. A steel belt according to claim 9, **characterized in that** the metal oxide layer (7) has a thickness in the interval 50-100 nm.

13. A steel belt according to any of claims 9-12, **characterized in that** the steel belt (1) is made of a low carbon, chromium-nickel steel.

## Patentansprüche

1. Verfahren zur Oberflächenbehandlung eines Stahlbandes, wobei das Verfahren die Schritte des Bereitstellens (100) des Stahlbandes (1), das aus martensitischem Edelstahl hergestellt ist, des Durchführens eines elektrochemischen Polierens (300) einer Oberfläche (9) des Stahlbandes und anschließende Durchführung einer Wärmebehandlung (500) des Stahlbandes umfasst, wodurch eine Metalloxidschicht (7), die Chromoxid und Eisenoxid umfasst, auf der elektrochemisch polierten Oberfläche (9) des Stahlbandes (1) gebildet wird.

2. Verfahren nach Anspruch 1, **dadurch gekennzeichnet, dass** das Stahlband (1) aus einem kohlenstoffarmen Chrom-Nickel-Stahl bereitgestellt wird.

3. Verfahren nach Anspruch 1 oder 2, **dadurch gekennzeichnet, dass** das Stahlband (1) aus einem Stahl hergestellt ist, der durch Ausscheidungshärtung härtbar ist.

4. Verfahren nach einem der vorstehenden Ansprüche, **dadurch gekennzeichnet, dass** die Wärmebehandlung (500) des Stahlbandes (1) in einer Atmosphäre durchgeführt wird, die Luft ist.

5. Verfahren nach einem der vorhergehenden Ansprüche, **dadurch gekennzeichnet, dass** die Wärmebehandlung (500) des Stahlbandes (1) bei einer Temperatur in dem Bereich von 450 bis 650 °C durchgeführt wird.

6. Verfahren nach einem der vorhergehenden Ansprüche, **gekennzeichnet durch** Durchführen der Wärmebehandlung (500) des Stahlbandes (1) bei einer Temperatur in dem Intervall von 480 bis 600 °C.

7. Verfahren nach einem der vorhergehenden Ansprüche, **dadurch gekennzeichnet, dass** die Wärmebehandlung (500) des Stahlbandes (1) bei einer Temperatur in dem Bereich von 500-550 °C durchgeführt wird.

8. Verfahren nach einem der vorhergehenden Ansprüche, **dadurch gekennzeichnet, dass** die Wärmebehandlung (500) des Stahlbandes (1) über einen Zeitraum in dem Bereich von 0,75 bis 1,25 Stunden durchgeführt wird.

9. Stahlband aus martensitischem rostfreiem Stahl, wobei das Stahlband (1) eine Metalloxidschicht (7) aufweist, die Chromoxid und Eisenoxid umfasst, wobei die Schicht auf einer elektrochemisch polierten Oberfläche (9) des Stahlbandes (1) mittels einer Wärmebehandlung des Stahlbandes gebildet wurde.

10. Stahlband nach Anspruch 9, **dadurch gekennzeichnet, dass** die Metalloxidschicht (7) eine Dicke in dem Bereich von 10-150 nm aufweist.

11. Stahlband nach Anspruch 9, **dadurch gekennzeichnet, dass** die Metalloxidschicht (7) eine Dicke in dem Bereich von 30-120 nm aufweist.

12. Stahlband nach Anspruch 9, **dadurch gekennzeichnet, dass** die Metalloxidschicht (7) eine Dicke in dem Bereich von 50-100 nm aufweist.

13. Stahlband nach einem der Ansprüche 9-12, **dadurch gekennzeichnet, dass** das Stahlband (1) aus einem kohlenstoffarmen Chrom-Nickel-Stahl hergestellt ist.

## Revendications

1. Procédé de traitement de surface d'une bande d'acier, le procédé comprenant les étapes de fourniture (100) de la bande d'acier (1) constituée d'acier inoxydable martensitique, de réalisation d'un polissage électrochimique (300) d'une surface (9) de la bande d'acier et de réalisation d'un traitement thermique (500) ultérieur de la bande d'acier, formant ainsi une couche d'oxyde métallique (7) comprenant de l'oxyde de chrome et de l'oxyde de fer sur la surface (9) polie électrochimiquement de la bande d'acier (1).

2. Procédé selon la revendication 1, **caractérisé par** la fourniture de la bande d'acier (1) constituée d'un acier au chrome-nickel à faible teneur en carbone.

3. Procédé selon la revendication 1 ou 2, **caractérisé par** la fourniture de la bande d'acier (1) constituée d'un acier durcissable par durcissement par précipitation.

4. Procédé selon une quelconque revendication précédente, **caractérisé par** la réalisation du traitement thermique (500) de la bande d'acier (1) dans une atmosphère qui est l'air.

5. Procédé selon une quelconque revendication précédente, **caractérisé par** la réalisation du traitement thermique (500) de la bande d'acier (1) à une température comprise dans l'intervalle de 450 à 650°C.

6. Procédé selon une quelconque revendication précédente, **caractérisé par** la réalisation du traitement thermique (500) de la bande d'acier (1) à une température comprise dans l'intervalle de 480 à 600°C.

7. Procédé selon une quelconque revendication précédente, **caractérisé par** la réalisation du traitement thermique (500) de la bande d'acier (1) à une température comprise dans l'intervalle de 500 à 550°C.

8. Procédé selon une quelconque revendication précédente, **caractérisé par** la réalisation du traitement thermique (500) de la bande d'acier (1) pendant une période de temps comprise dans l'intervalle de 0,75 à 1,25 heure.

9. Bande d'acier constituée d'acier inoxydable martensitique, la bande d'acier (1) présentant une couche d'oxyde métallique (7) comprenant de l'oxyde de chrome et de l'oxyde de fer, laquelle couche a été formée sur une surface (9) polie électrochimiquement de la bande d'acier (1) au moyen d'un traitement thermique de la bande d'acier.

10. Bande d'acier selon la revendication 9, **caractérisée en ce que** la couche d'oxyde métallique (7) a une épaisseur comprise dans l'intervalle de 10 à 150 nm.

11. Bande d'acier selon la revendication 9, **caractérisée en ce que** la couche d'oxyde métallique (7) a une épaisseur comprise dans l'intervalle de 30 à 120 nm.

12. Bande d'acier selon la revendication 9, **caractérisée en ce que** la couche d'oxyde métallique (7) a une épaisseur comprise dans l'intervalle de 50 à 100 nm.

13. Bande d'acier selon l'une quelconque des revendications 9 à 12, la bande d'acier étant **caractérisée en ce qu'**elle est constituée d'un acier au chrome-nickel à faible teneur en carbone.
